## Europäisches Patentamt
## European Patent Office
## Office européen des brevets

(11) Numéro de publication: **0 198 421**
**B1**

---

## (12) FASCICULE DE BREVET EUROPEEN

(45) Date de publication du fascicule du brevet:
**25.01.89**

(21) Numéro de dépôt: **86104891.6**

(22) Date de dépôt: **10.04.86**

(51) Int. Cl.⁴: **B01D 13/00,** B01D 29/38,
B01D 35/26
// F04D1/02, F04F7/00

---

(54) Procédé et dispositif pour filtrer une suspension de particules dans un liquide.

---

(30) Priorité: **12.04.85 FR 8505544**

(43) Date de publication de la demande:
**22.10.86 Bulletin 86/43**

(45) Mention de la délivrance du brevet:
**25.01.89 Bulletin 89/4**

(84) Etats contractants désignés:
**BE CH DE FR GB IT LI NL SE**

(56) Documents cités:
**BE-A- 666 744
CH-A- 528 019
FR-A- 482 036
FR-A- 1 136 692**

(73) Titulaire: **COMPAGNIE GENERALE D'ELECTRICITE
Société anonyme dite:, 54, rue La Boétie, F-75382 Paris
Cédex 08(FR)**

(72) Inventeur: **Galaj, Stanislas, 27, avenue Lénine,
F-94110 Arcueil(FR)**

(74) Mandataire: **Weinmiller, Jürgen et al,
Lennéstrasse 9 Postfach 24, D-8133 Feldafing(DE)**

---

ACTORUM AG

## Description

La présente invention concerne un procédé pour filtrer une suspension de particules dans un liquide, et un dispositif pour mettre en oeuvre ce procédé.

Le procédé est d'un type dans lequel on effectue:
– un passage continu, à travers une membrane poreuse, du liquide de la suspension disposée d'un premier côté de la membrane, de façon à obtenir un flux de liquide filtré du deuxième côté de la membrane, des particules de la suspension venant alors s'agglutiner d'une manière indésirable sur le premier côté de la membrane en obstruant ses pores,
– et au moins un refoulement momentané du liquide filtré vers la membrane en sens inverse de celui dudit flux, de façon à renvoyer dans la suspension les particules agglutinées sur le premier côté de la membrane au cours dudit passage.

Le dispositif est d'un type comportant:
– une membrane poreuse dont les pores sont susceptibles d'arrêter les particules, la suspension étant disposée d'un premier côté de la membrane, en contact avec ce premier côté,
– des moyens pour faire passer le liquide de la suspension à travers la membrane du premier côté vers le deuxième côté, de manière à obtenir un flux de liquide filtré du deuxième côté de la membrane, des particules venant alors s'agglutiner d'une manière indésirable sur le premier côté de la membrane en obstruant ses pores,
– et des moyens pour exercer sur le deuxième côté de la membrane une pression momentanée de refoulement du liquide filtré, en sens inverse de celui de l'écoulement dudit flux, pour renvoyer dans la suspension les particules agglutinées sur le premier côté de la membrane.

Un procédé et un dispositif des types mentionnés ci-dessus sont décrits dans la demande de brevet FR-A 2 513 536. Dans cette demande de brevet, le système de refoulement du liquide filtré comporte un piston mobile dans un cylindre en communication avec le liquide filtré ayant traversé la membrane, et des moyens de commande du déplacement de ce piston.

Ce dispositif présente un inconvénient. En effet, le système de refoulement nécessite la présence d'un obstacle à l'écoulement du liquide filtré, tel qu'une vanne ou un clapet, pour interrompre l'écoulement du liquide pendant le refoulement. Il en résulte une diminution de la fiabilité du dispositif.

La présente invention a notamment pour but de pallier cet inconvénient.

Elle a pour objet un procédé pour filtrer une suspension de particules dans un liquide, du type mentionné ci-dessus, caractérisé en ce que le refoulement momentané du liquide est effectué:
– en introduisant le flux de liquide filtré dans un conduit à une de ses extrémités, le conduit étant enroulé autour d'un axe, le liquide filtré étant recueilli à l'autre extrémité du conduit,
– en entraînant progressivement le conduit en rotation autour de l'axe en sens inverse du sens de l'écoulement relatif du liquide filtré dans le conduit, jusqu'à ce que la vitesse de rotation du conduit atteigne une valeur constante prédéterminée supérieure à la vitesse dudit écoulement relatif,
– puis en freinant brusquement la rotation du conduit.

Elle a aussi pour objet un dispositif pour filtrer une suspension de particules dans un liquide, du type mentionné ci-dessus, caractérisé en ce que lesdits moyens pour exercer sur le deuxième côté de la membrane une pression momentanée de refoulement du liquide filtré comportent:
– un conduit s'enroulant autour d'un axe,
– des moyens pour introduire le flux de liquide filtré dans le conduit, à une première de ses extrémités située à proximité de l'axe, de manière à provoquer un écoulement relatif du liquide dans le conduit vers sa deuxième extrémité, dans un sens autour de l'axe,
– des moyens pour entraîner progressivement le conduit en rotation autour de l'axe, en sens inverse de celui dudit écoulement relatif, jusqu'à ce que la vitesse de rotation atteigne une valeur constante prédéterminée supérieure à la vitesse dudit écoulement relatif,
– et des moyens pour freiner brusquement la rotation du conduit.

Dans un premier mode de réalisation du dispositif selon l'invention, le conduit a la forme d'une spirale disposée sensiblement suivant une surface circulaire plane perpendiculaire à l'axe et centrée sur l'axe.

Dans une première variante de ce mode de réalisation l'extrémité intérieure de la spirale est située à proximité du centre de la surface circulaire pour former la deuxième extrémité du conduit, tandis que l'extrémité extérieure de la spirale est ramenée vers l'axe pour former la première extrémité du conduit.

Dans une deuxième variante, la deuxième extrémité du conduit est située à la périphérie de ladite surface circulaire, de façon à permettre l'éjection du liquide filtré par cette deuxième extrémité pendant la rotation du conduit, lesdits moyens pour faire passer le liquide de la suspension à travers la membrane comportant la pression d'aspiration créée par cette éjection. Dans le cas de cette deuxième variante, le conduit peut comporter, au voisinage de sa deuxième extrémité, une portion le long de laquelle la distance minimale de ladite portion audit axe décroit lorsqu'on se rapproche de ladite deuxième extrémité, la décroissance de cette distance pour toute la longueur de ladite portion étant supérieure à la dimension transversale intérieure de cette portion du conduit, cette dimension étant mesurée suivant un rayon de la spirale.

Lorsqu'on désire réaliser un appareil portatif du type de cette deuxième variante, avantageusement:
– la membrane a la forme d'un tube cylindrique de révolution fermé à une première de ces extrémités, cette membrane étant fixée au conduit par la deuxième extrémité du tube, l'axe du tube étant vertical et confondu avec l'axe de rotation du conduit,
– il comporte en outre:
un corps macroporeux tubulaire dont la surface extérieure est appliquée sur la surface intérieure de la membrane, et
un noyau cylindrique solidaire du conduit et disposé le long dudit axe dans le volume intérieur du corps macroporeux tubulaire, de façon à ménager entre la surface du noyau et la surface interne du corps macroporeux un espace tubulaire capillaire en communication avec la première extrémité du conduit, la surface extérieure de ladite membrane constituant le premier côté de la membrane en contact avec la suspension,

– le conduit est capillaire au moins suivant deux parties extrêmes de ce conduit,

– lesdits moyens pour faire passer le liquide de la suspension du premier côté vers le deuxième côté de la membrane comportent les tensions capillaires dans les pores de la membrane, du corps macroporeux et de l'espace tubulaire capillaire.

Le conduit peut être alors capillaire sur toute sa longueur. Mais le conduit peut comporter aussi entre ses deux parties extrêmes capillaires une partie médiane dont la dimension transversale intérieure est suffisamment grande pour que les tensions capillaires du liquide y soient négligeables, une première partie extrême capillaire du conduit ramenant l'extrémité extérieure de la spirale vers l'axe de façon à former la première extrémité du conduit, la deuxième partie extrême capillaire du conduit amenant l'extrémité intérieure de la spirale vers la périphérie de la surface circulaire de façon à former la deuxième extrémité du conduit.

Dans le cas de la deuxième variante, le dispositif peut comporter, en outre un récipient fixe entourant le conduit, ce récipient étant rempli de liquide filtré et comportant une ouverture ménagée dans sa partie supérieure pour permettre de recueillir le liquide filtré.

Dans le cas de l'appareil portatif, le dispositif peut comporter en outre, un récipient solidaire du conduit et entourant ce conduit, la paroi de ce récipient étant munie dans sa partie supérieure d'une membrane poreuse étanche au liquide de la suspension mais perméable à l'air, ce récipient comportant des moyens d'ouverture pour permettre de recueillir le liquide filtré.

Dans un deuxième mode de réalisation du dispositif selon l'invention, le conduit a la forme d'une hélice disposée suivant une surface cylindrique de révolution autour dudit axe, les deux extrémités de l'hélice étant ramenées vers ledit axe pour former les première et deuxième extrémités du conduit.

Des formes particulières d'exécution de l'objet de la présente invention sont décrites ci-dessous, à titre d'exemple, en référence aux dessins annexés, dans lesquels:

– la figure 1 représente, en élévation et en coupe partielle, un premier mode de réalisation du dispositif selon l'invention,

– la figure 2 est une vue, à plus grande échelle, du conduit en spirale faisant partie du dispositif illustré par la figure 1,

– la figure 3 est une vue en plan du conduit en spirale illustré par la figure 2,

– la figure 4 est une vue, en élévation et en coupe partielle, d'un deuxième mode de réalisation du dispositif selon l'invention,

– la figure 5 est une vue, en élévation et en coupe partielle, d'un troisième mode de réalisation du dispositif selon l'invention,

– la figure 6 est une vue, en élévation et à plus grande échelle, du conduit en spirale du dispositif illustré par la figure 5,

– la figure 7 est une vue en plan du conduit en spirale illustré par la figure 6,

– la figure 8 est une vue, en élévation et en coupe, d'un quatrième mode de réalisation du dispositif selon l'invention,

– la figure 9 est une vue, en coupe par un plan IX–IX, du conduit du dispositif illustré par la figure 8, la partie coupée n'étant hachurée que partiellement pour augmenter la clarté du dessin,

– la figure 10 est une vue, en plan et en coupe, d'une variante de réalisation d'un conduit adaptable sur le dispositif illustré par la figure 8,

– et la figure 11 est une vue, en élévation et en coupe partielle, d'un cinquième mode de réalisation d'un dispositif selon l'invention du type de celui illustré par la figure 8.

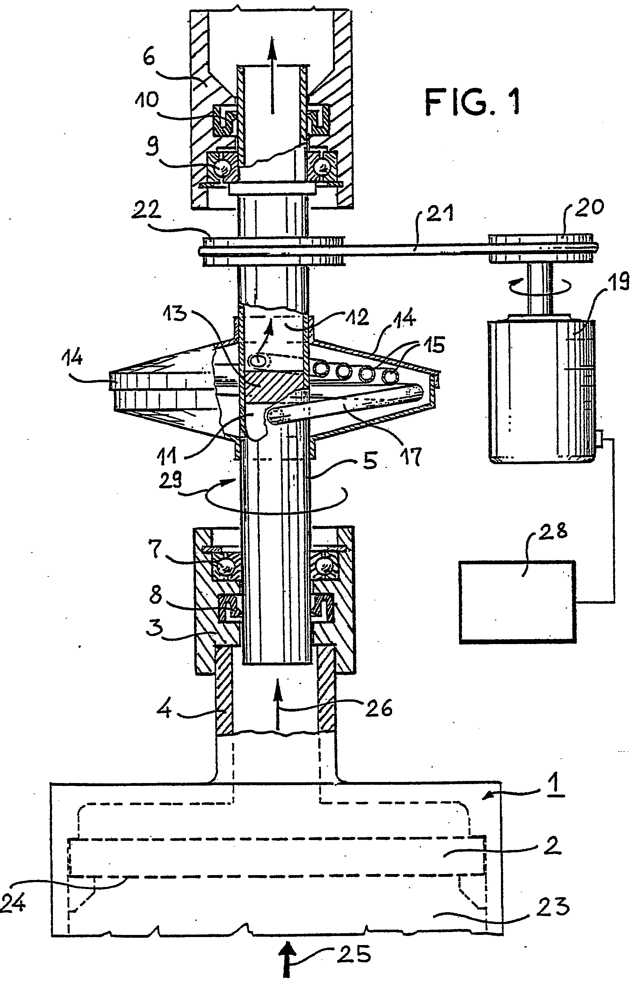

Sur la figure 1, est représenté partiellement un organe de filtration 1 de forme générale cylindrique verticale. Dans le volume intérieur de l'organe 1 est disposée horizontalement une membrane poreuse 2 dont les bords s'appuyent sur la paroi interne latérale cylindrique de l'organe de filtration. Celui-ci comporte sur sa face supérieure une sortie tubulaire verticale 4. Un arbre creux 5 est monté verticalement en rotation suivant l'axe de la sortie 4 autour de deux paliers 3 et 6, en forme de manchon. Le palier 3 fixé sur la partie supérieure de la sortie 4 entoure l'extrémité inférieure de l'arbre 5 par l'intermédiaire d'un roulement à billes 7 et d'un joint à lèvre 8 situé entre la sortie 4 et le roulement 7. Le palier 6 entoure l'extrémité supérieure de l'arbre 5 par l'intermédiaire d'un roulement à billes 9 et d'un joint à lèvre 10 placé entre le roulement 9 et l'extrémité supérieure de l'arbre 5.

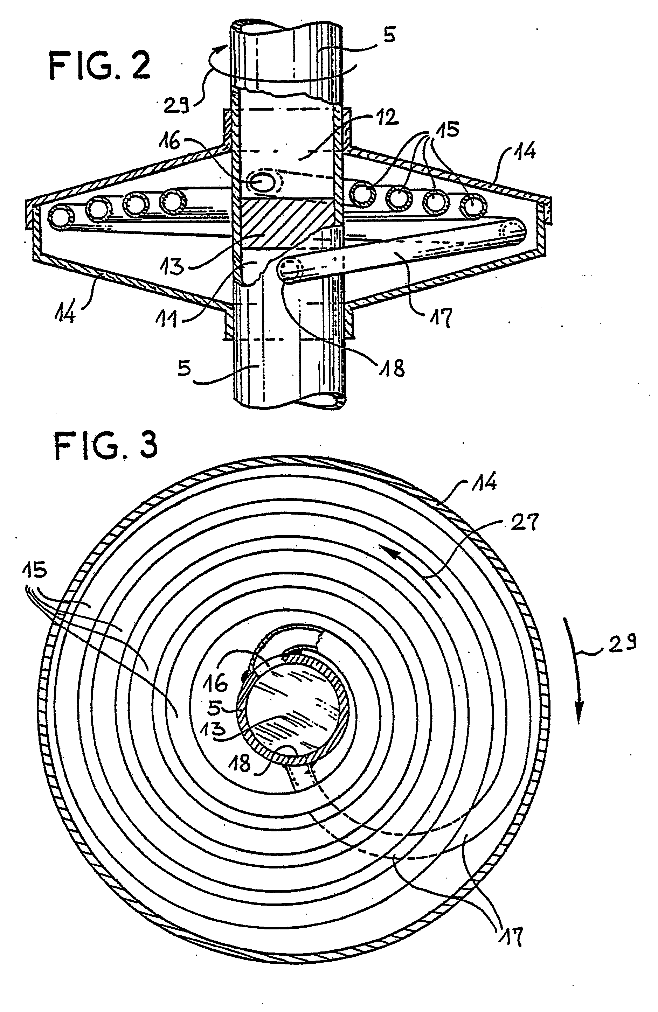

La cavité cylindrique de l'arbre creux 5 est séparée en deux parties 11 et 12 par une cloison médiane 13. Sur une partie médiane de l'arbre 5 est fixée une enveloppe 14 contenant un conduit 15 en forme de spirale, représentée en détail sur les figures 2 et 3.

Le conduit en spirale 15 s'enroule autour de l'arbre 5 dans un plan sensiblement horizontal. L'extrémité du conduit 15 située à l'intérieur de la spirale débouche dans la partie supérieure 12 de la cavité de l'arbre 5 par une ouverture 16 ménagée dans la paroi cylindrique de l'arbre 5 un peu au-dessus de la cloison 13. Le conduit 15 comporte un prolongement 17 ramenant l'extrémité extérieure de la spirale vers l'arbre 5. Ce prolongement 17 débouche dans la partie inférieure 11 de la cavité de l'arbre 5 par une ouverture 18 ménagée dans la paroi cylindrique de l'arbre 5 un peu au-dessous de la cloison 13.

Sur l'arbre d'un moteur électrique 19 est fixée une poulie 20 reliée par une courroie 21 à une poulie 22 fixée sur l'arbre 5.

Le dispositif illustré par les figures 1 à 3 fonctionne de la manière suivante.

On dispose une suspension liquide de particules à filtrer dans le volume interne 23 de l'organe de filtration 1, ce volume étant situé au-dessous de la membrane 2, de façon que la suspension soit en contact avec le côté inférieur 24 de cette membrane. On exerce alors sur la suspension une pression dirigée dans le sens 25 vers la membrane 2, par exemple au moyen d'un piston non représenté. Les pores de la membrane 2 ont une dimension inférieure à celle des particules à filtrer. La phase liquide de la suspension traverse donc la membrane 2 pour donner un flux 26 de liquide filtré sortant de l'organe 1 par l'ouverture 4. Le liquide filtré pénètre dans la partie 11 de la cavité de l'arbre 5, le roulement 7 étant protégé par le joint 8 contre toute infiltration de liquide. Le liquide filtré entre ensuite dans le conduit en spirale 15 par l'ouverture 18 et en sort par l'ouverture 16 pour s'écouler dans la partie supérieure 12 de l'arbre 5. L'écoulement relatif du liquide filtré dans le conduit s'effectue à une vitesse v dans le sens de la flèche 27 visible sur la figure 3. Le liquide filtré peut être recueilli à l'extrémité supérieure de l'arbre 5 par des moyens non représentés.

Cependant on constate, au bout d'une certaine durée de filtration, que des particules de la suspension viennent s'agglutiner sur le côté inférieur 24 de la membrane, ce qui entraîne un colmatage partiel des pores de la membrane, ce colmatage augmentant en fonction du temps.

Pour procéder à un décolmatage de la membrane, on opère de la manière suivante.

On met en marche le moteur 19 à l'aide d'un circuit d'alimentation 28 de façon à faire tourner l'arbre 5 autour de son axe à très faible vitesse dans le sens 29 inverse du sens d'écoulement relatif 27 du liquide filtré dans le conduit en spirale 15.

Puis, à l'aide, du circuit 28, on augmente progressivement la vitesse de rotation, toujours dans le sens 29, jusqu'à ce que cette vitesse atteigne une valeur absolue V prédéterminée, nettement supérieure à la vitesse v d'écoulement du liquide dans le conduit lorsque V = o. Le démarrage de la rotation du conduit doit être lent et progressif pour éviter que le mouvement relatif du conduit par rapport au liquide n'engendre, en aval de la membrane, une force d'aspiration trop importante qui, s'ajoutant à la force de pression 25 s'exerçant en amont de la membrane, risquerait d'accélérer son colmatage.

Lorsque le conduit tourne à la vitesse V, la masse de liquide contenue dans le conduit est entraîné dans le sens de rotation de l'arbre à la vitesse V–v.

On diminue alors brusquement la vitesse de rotation du moteur 19, celui-ci étant muni par exemple d'un système de freinage. La colonne de liquide contenue dans le conduit a tendance, par effet d'inertie, à continuer sa course à la vitesse V–v.

Par rapport au conduit, le sens d'écoulement du liquide est alors brutalement inversé: il en résulte une pression momentanée du liquide filtré dirigée vers la membrane, en sens inverse de celui d'écoulement du liquide en régime normal de filtration. La valeur crête de cette pression momentanée est d'autant plus forte que la longueur de la colonne de liquide contenue dans le conduit est grande, que la vitesse V–v avant le freinage est forte, et que la décélération procurée par le freinage est importante.

A titre indicatif, dans le cas de filtration de l'eau, pour un conduit en spirale de longueur 10 mètres et de section 10 cm², une vitesse v d'un mètre par seconde, et une vitesse V de 16 mètres par seconde, on peut obtenir un effet correspondant à une pression de refoulement de l'ordre de 1,5 bar si le temps pour freiner le moteur est d'une seconde, et un effet correspondant à une pression de refoulement de l'ordre de 15 bars si le temps pour freiner le moteur est de 0,1 seconde.

La pression momentanée de refoulement entraîne le "décollement" de la couche de particules agglutinées sur le côté 24 de la membrane 2. Ces particules sont renvoyées dans la suspension, la membrane étant alors décolmatée.

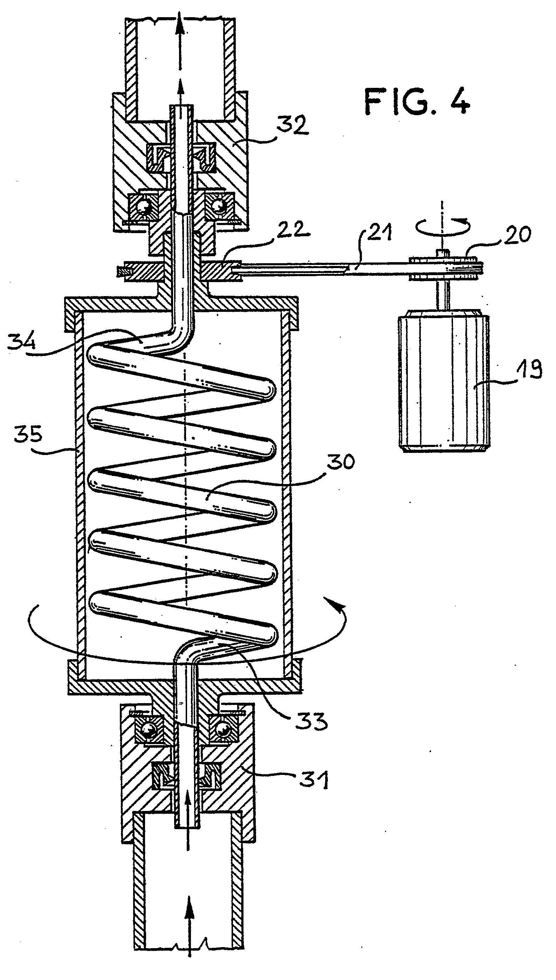

Le dispositif représenté sur la figure 4 est analogue à celui illustré par la figure 1. Mais, dans le cas de la figure 4, le conduit 30 a la forme d'une hélice disposée suivant une surface cylindrique de révolution autour de l'axe de rotation. Cette hélice est fixée par exemple dans une enveloppe 35 cylindrique, entraînée en rotation par un moteur 19 dont l'arbre porte une poulie 20 reliée par une courroie 21 à une poulie 22 solidaire de l'enveloppe 35. La rotation de l'enveloppe 35 s'effectue verticalement autour de deux paliers 31 et 32. Le conduit 30 comporte deux prolongements 33, 34 ramenant les deux extrémités respectives de l'hélice vers l'axe de rotation, le prolongement 33 étant en communication avec la sortie de la membrane de l'organe de filtration non représenté, tandis que le prolongement 34 débouche sur une canalisation conduisant à la sortie du liquide filtré du dispositif.

Bien entendu, le fonctionnement du dispositif illustré par la figure 4 est tout à fait identique à celui du dispositif représenté sur la figure 1.

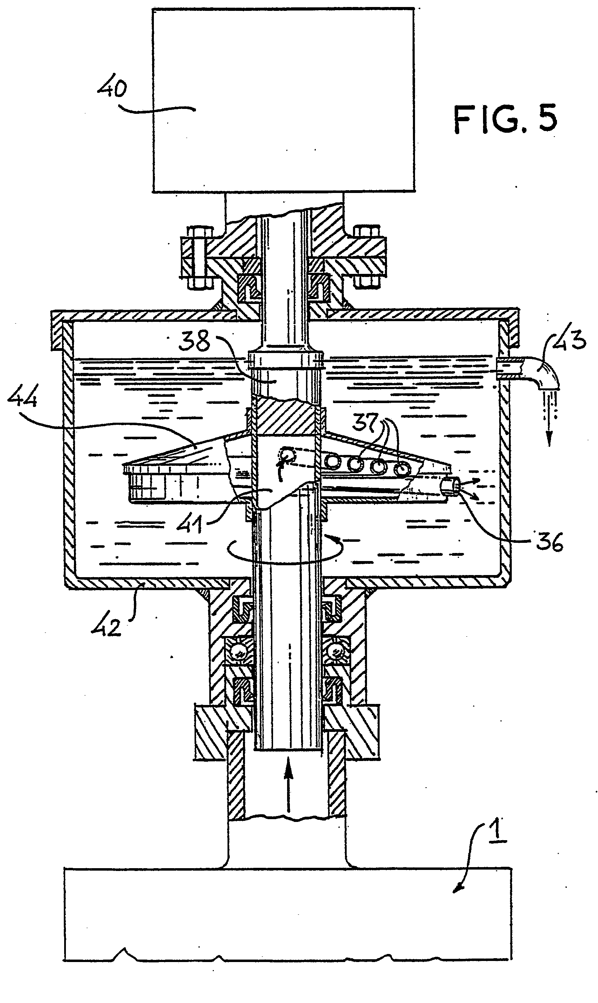

Le dispositif représenté sur les figures 5 à 7 représente une variante du dispositif illustré par la figure 1, dans laquelle l'extrémité extérieure 36 du conduit en spirale 37 est située à l'extrémité extérieure de la spirale. Cela permet l'éjection du liquide filtré par l'extrémité 36 pendant la rotation du conduit par l'effet de la force centrifuge. Cette éjection centrifuge crée une aspiration à travers la membrane de l'organe de filtration 1, en aval de cette membrane. Il n'est donc plus nécessaire d'appliquer une force de pression (25 figure 1) sur la suspension pour faire passer la phase liquide de cette suspension à travers la membrane.

L'entraînement en rotation de l'arbre 38 supportant le conduit 37 se fait alors avantageusement directement par un moteur 40.

Bien entendu, il est nécessaire d'amorcer l'éjection du liquide filtré avant l'entraînement en rotation de l'arbre 38, en remplissant de liquide filtré le conduit 37 ainsi que la cavité 41 de l'arbre 38, jusqu'à la membrane de l'organe de filtration 1.

La pression momentanée de refoulement est réalisée aussi par un entraînement progressif à la vitesse V de l'arbre 38, suivi d'un freinage brusque de cette rotation. Il peut en résulter alors un désamorçage de l'éjection de liquide filtré.

Pour éviter cet inconvénient on dispose un récipient fixe 42 entourant le conduit 37, le moteur 40 pouvant être fixé, comme représenté, sur le récipient 42. Ce récipient comporte dans sa partie supérieure une ouverture 43 située à un niveau plus élevé que la sortie 36 du conduit. Le récipient 42 est rempli de liquide filtré, entre sa paroi interne et l'enveloppe 44 du conduit 37, à un niveau supérieur à celui de la sortie 36 du conduit 37.

Pendant la rotation du conduit, le liquide filtré est éjecté du conduit 37 par sa sortie 36. Le liquide éjecté élève le niveau du liquide dans le récipient 42, le liquide filtré s'écoulant par l'ouverture 43 dès que le niveau de liquide dans le récipient atteint celui de l'ouverture 43.

Cette disposition empêche l'air de rentrer dans le conduit 37 lorsqu'on freine brusquement la rotation du conduit pour décolmater la membrane de l'organe de filtration, ce qui évite un désamorçage du dispositif.

Pour diminuer encore le risque de désamorçage, le conduit 37 comporte, au voisinage de son extrémité 36, une portion 45 s'incurvant vers l'axe 46 de rotation du conduit. La distance minimale de cette portion 45 à l'axe 46 décroît lorsqu'on se rapproche de l'extrémité 36, d'une valeur "D" à une valeur "d" sur toute la longueur de la portion 45. La décroissance "D–d" doit être supérieure à la dimension transversale intérieure "c" de la portion 45, cette dimension étant mesurée suivant un rayon 47 de la spirale. Le conduit peut alors, en aval de la portion 45, s'incurver de nouveau vers l'extérieur pour se terminer suivant l'extrémité 36 de manière sensiblement radiale. L'effet de siphon qui résulte de cette disposition empêche tout désamorçage lorsque le conduit est en rotation.

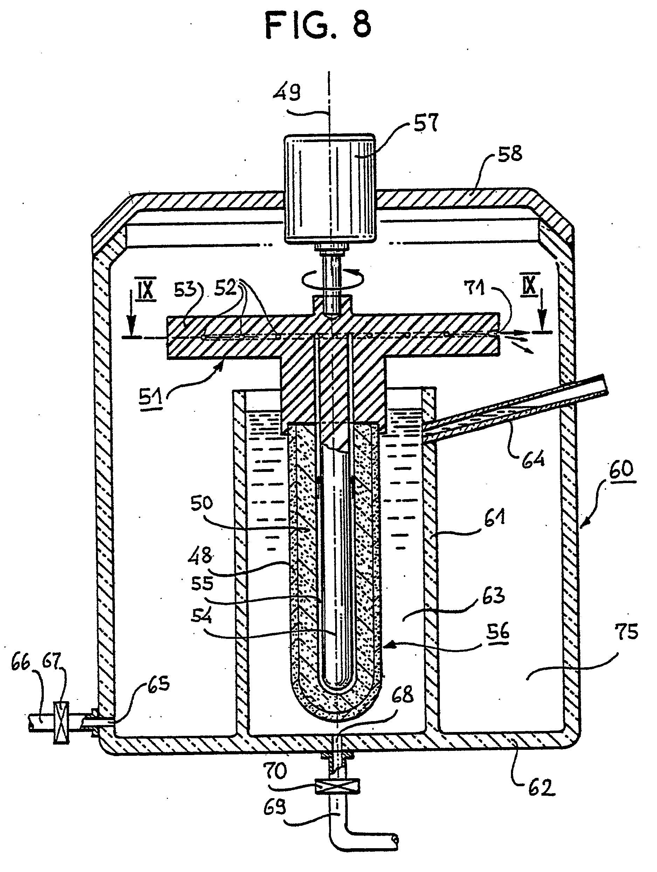

Le dispositif représenté sur la figure 8 est particulièrement adapté à la réalisation d'appareils portatifs, de faibles dimensions. Il comporte une membrane microporeuse 48 ayant la forme d'un tube cylindrique de révolution, fermé à une de ses extrémités.

La membrane est disposée verticalement suivant un axe 49 identique à l'axe de rotation du conduit, de manière que l'extrémité fermée du tube soit située dans la partie inférieure de la membrane. La surface extérieure d'un corps macroporeux tubulaire 50 est appliquée sur la surface intérieure de la membrane. Avantageusement la membrane 48 et le corps macroporeux 50 sont réalisés en céramique et forment une seule pièce 56. Les pores de la membrane 48 sont aptes à arrêter les particules de la suspension à filtrer.

L'extrémité supérieure de la pièce en céramique est fixée sur une pièce 51 en matière plastique par exemple, cylindrique de révolution autour de l'axe 49. Cette pièce 51 comprend un plateau horizontal circulaire 53 dans lequel sont disposés les spires d'un conduit en spirale 52. La pièce 51 comporte aussi un noyau cylindrique axial 54. Entre la surface du noyau 54 et la surface interne du corps macroporeux 50 est ménagé un espace capillaire cylindrique 55 qui est en communication avec l'entrée intérieure du conduit 52. L'ensemble de filtration constitué par les pièces 51 et 56 peut être entraîné directement en rotation par un moteur 57 autour de l'axe 49. L'enveloppe du moteur 47 est fixée dans un couvercle 58 d'un récipient 60 entourant l'ensemble de filtration. Ce récipient comporte une cloison 61 fixée sur le fond 62 du récipient 60, de manière à former une chambre intérieure cylindrique 63 ouverte à son extrémité supérieure. La chambre 63 est remplie de liquide à filtrer dans lequel est plongée la membrane 48 de la pièce 56. Une goulotte d'alimentation 64 traversant la paroi du récipient 60 permet d'alimenter la chambre 63 en liquide à filtrer. Une percée 65 ménagée au fond du récipient 60 communique avec une canalisation d'évacuation 66 munie d'une vanne 67. De même une percée 68 du fond de la chambre 63 communique avec une canalisation de vidange 69 munie d'une vanne 70.

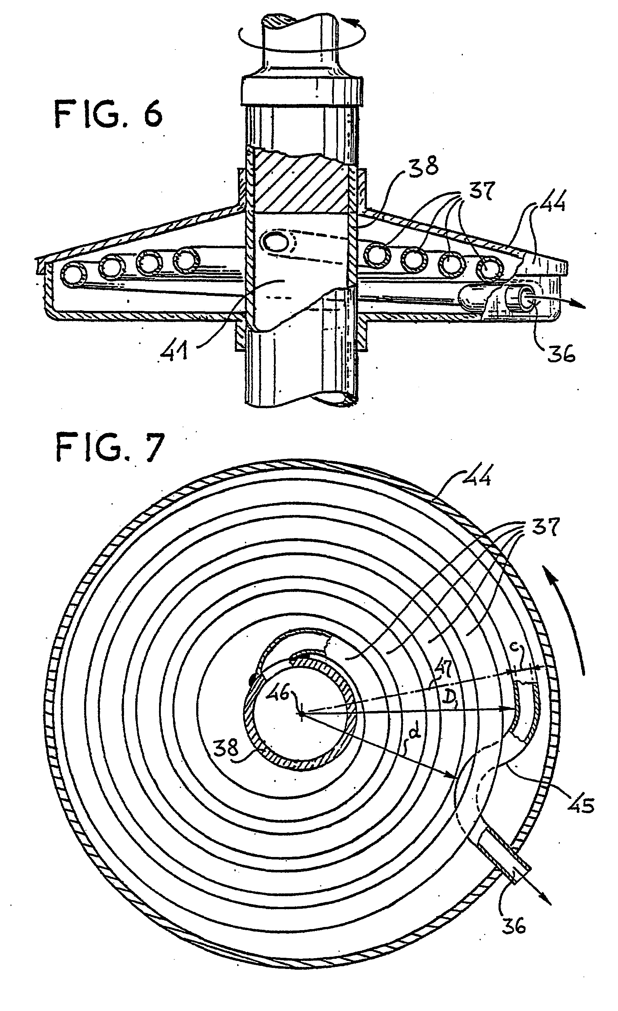

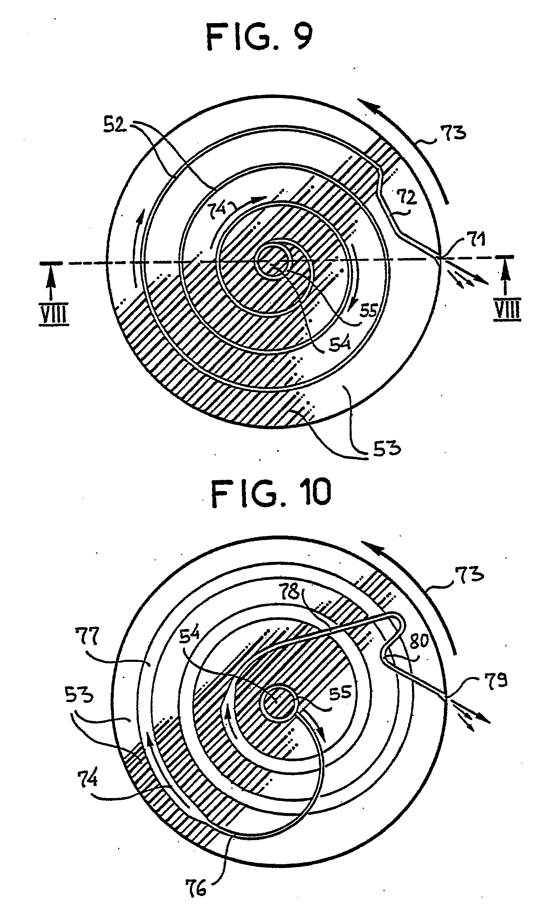

La figure 9 montre la forme du conduit en spirale 52 muni à proximité de son extrémité extérieure 71 d'un système de siphon 72 analogue à celui représenté sur la figure 7. Le conduit 52 est capillaire sur toute sa longueur.

Le dispositif illustré par les figures 8 et 9 fonctionne de la manière suivante.

Après mise en marche du moteur 57 dans le sens 73, on introduit la suspension à filtrer dans la chambre 63. Par capillarité la phase liquide de la suspension traverse les pores de la membrane 48, et vient remplir les pores du corps macroporeux 50 ainsi que l'espace capillaire 55 et le volume interne du conduit capillaire 52, tandis que les particules de la suspension restent dans la chambre 63 à l'extérieur de la membrane 48.

La rotation du conduit provoque par centrifugation l'écoulement du liquide dans le conduit dans le sens 74 opposé au sens 73 et l'éjection de ce liquide par l'extrémité 71 du conduit. La phase liquide éjectée s'écoule au fond de la chambre périphérique 75 du récipient 60.

S'il se produit une accumulation de particules sur la paroi extérieure de la membrane, on freine brusquement la rotation du moteur 57, de façon à provoquer sur la membrane une pression inverse tendant à détacher de la membrane les particules agglutinées, comme il a déjà été décrit dans les exemples précédents. En plus de sa compacité, ce mode de réalisation présente l'avantage de supprimer les joints tournants d'étanchéité qui sont nécessaires dans le cas des figures 1, 4 et 5.

La figure 10 représente une variante d'un conduit en spirale pouvant être adapté aux dispositifs du type de celui représenté sur la figure 8. Ce conduit comporte une première partie capillaire 76 reliant l'extrémité supérieure de l'espace capillaire 55 à l'extrémité extérieure de la spirale. La partie 76 est raccordée à une partie intermédiaire 77 correspondant à la spirale proprement dite. Cette partie 77 peut avoir une dimension transversale interne plus importante et ne pas être capillaire. Enfin la partie 77 est raccordée, à l'extrémité intérieure de la spirale, à une dernière partie 78 capillaire aboutissant, à la périphérie du disque 53, à l'extrémité 79 d'éjection du conduit, à travers un système de siphon 80 analogue à ceux précédemment décrits. Ce type de conduit présente l'avantage de diminuer la perte de change dans le conduit et d'augmenter la réserve de liquide utilisée pour le décolmatage, en conservant une excellente sécurité contre le désamorçage.

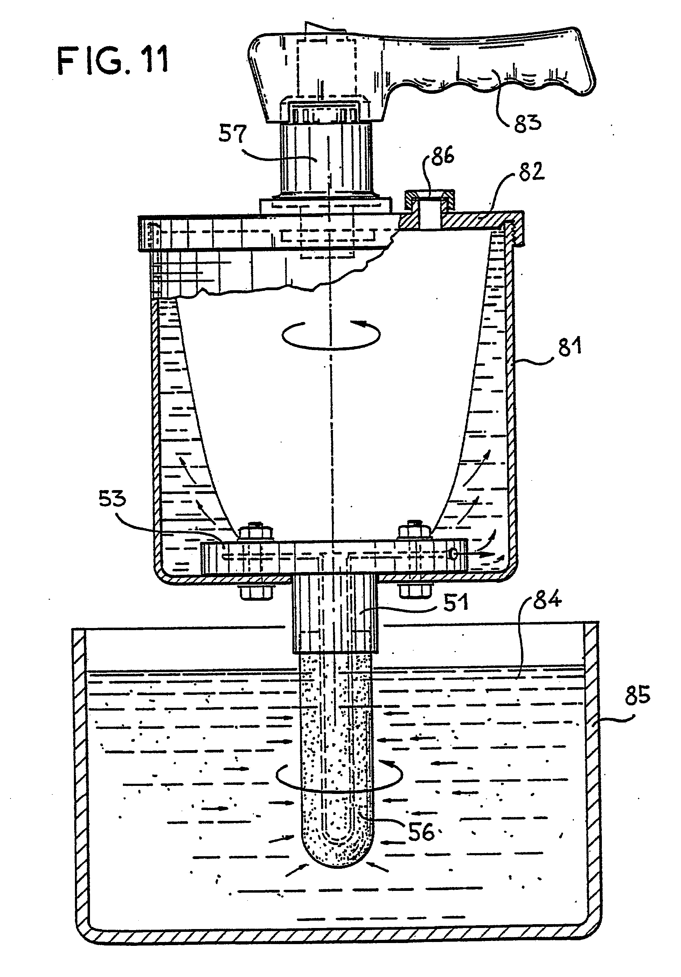

La figure 11 montre un autre mode de réalisation du dispositif selon l'invention du type de celui représenté sur la figure 8, les éléments analogues ou identiques sur les figures 8 et 11 ayant été désignés par les mêmes références. Le dispositif illustré par la figure 11 comporte en outre un récipient 81 fixé à la partie inférieure du plateau 53 contenant le conduit en spirale. Ce récipient comporte un couvercle 82 amovible sur lequel est fixé le moteur-frein 57 qui peut être muni d'une pile d'alimentation électrique. Sur ce moteur 57 est fixée une poignée 83 permettant de saisir d'une main tout le dispositif de filtration afin de plonger la membrane 56 dans une solution à filtrer 84 disposée par exemple dans un récipient 85. Sur le couvercle 82 est fixée une membrane poreuse 86 étanche au liquide de la suspension mais laissant passer l'air.

La filtration est effectué en entraînant une rotation par le moteur 57 la membrane de filtration 56 solidaire du conduit et du récipient 81, la membrane 86, fixée sur le couvercle 82, laissant sortir l'air du récipient 81 au fur et à mesure qu'il se remplit de liquide filtré, tout en empêchant toute fuite de liquide.

Bien entendu, si la membrane de filtration 56 vient à se colmater, on freine brusquement la rotation du moteur 57 comme il a déjà été décrit.

Ce mode de réalisation du dispositif selon l'invention permet d'éviter toute pollution du liquide filtré qui est recueilli dans un récipient fermé étanche au liquide.

Le dispositif selon l'invention permet de filtrer des solutions liquides de particules constituées par exemple de substances minérales, bactéries, colloïdales, grains de silice ou microgouttelettes d'une phase liquide non miscible avec le liquide de la suspension.

Le dispositif selon l'invention permet d'effectuer un décolmatage par refoulement momentané de liquide filtré. Le système de décolmatage ne comporte aucun obstacle matériel, tel que vanne ou clapet, sur le trajet d'écoulement du liquide filtré.

Le dispositif de filtration selon l'invention peut être utilisé avec tous les types d'organes de filtration à membrane poreuse. Bien entendu, il est possible d'associer, à un seul système de décolmatage à conduit tournant, un organe de filtration ou plusieurs organes de filtration identiques branchés en parallèle. Le dispositif de filtration selon l'invention est particulièrement avantageux lorsque la (ou les) membrane de l'organe de filtration est en céramique, ce matériau résistant particulièrement bien aux pressions de liquide élevées et à l'érosion.

**Revendications**

1. Procédé pour filtrer une suspension de particules dans un liquide, dans lequel on effectue:
– un passage continu, à travers une membrane poreuse, du liquide de la suspension disposée d'un premier côté de la membrane, de façon à obtenir un flux de liquide filtré du deuxième côté de la membrane, des particules de la suspension venant alors s'agglutiner d'une manière indésirable sur le premier côté de la membrane en obstruant ses pores,
– et au moins un refoulement momentané du liquide filtré vers la membrane en sens inverse de celui dudit flux, de façon à renvoyer dans la suspension les particules agglutinées sur le premier côté de la membrane au cours dudit passage,
ledit procédé étant caractérisé en ce que le refoulement momentané du liquide filtré est effectué:

– en introduisant le flux du liquide filtré (26) dans un conduit (15) à une de ses extrémités, le conduit étant enroulé autour d'un axe, le liquide filtré étant recueilli à l'autre extrémité du conduit,
– en entraînant progressivement le conduit en rotation autour de l'axe en sens inverse (29) du sens (27) de l'écoulement relatif du liquide filtré dans le conduit, jusqu'à ce que la vitesse de rotation du conduit atteigne une valeur constante prédéterminée supérieure à la vitesse dudit écoulement relatif,
– puis en freinant brusquement la rotation du conduit.

2. Dispositif pour filtrer une suspension de particules dans un liquide, comportant:
– une membrane poreuse dont les pores sont susceptibles d'arrêter les particules d'une suspension,
– des moyens pour faire passer le liquide de la suspension à travers la membrane,
– et des moyens pour exercer sur le côté aval de la membrane une pression momentanée de refoulement du liquide filtré, ledit dispositif étant caractérisé en ce que lesdits moyens pour exercer sur le côté aval de la membrane (2) une pression momentanée de refoulement du liquide filtré comportent:
– un conduit (15) s'enroulant autour d'un axe,
– des moyens (5, 11) pour introduire le flux de liquide filtré dans le conduit (15), à une première (18) de ses extrémités située à proximité de l'axe, de manière à provoquer un écoulement relatif du liquide dans le conduit vers sa deuxième extrémité dans un sens (27) autour de l'axe,
– des moyens (19 à 22) pour entraîner progressivement le conduit en rotation autour de l'axe, en sens inverse (29) de celui (27) dudit écoulement relatif, jusqu'à une vitesse de rotation de valeur constante prédéterminée supérieure à la vitesse dudit écoulement relatif,
– et des moyens (28) pour freiner brusquement la rotation du conduit.

3. Dispositif selon la revendication 2, caractérisé en ce que le conduit (15) a la forme d'une spirale disposée sensiblement suivant une surface circulaire plane perpendiculaire à l'axe et centrée sur l'axe.

4. Dispositif selon la revendication 3, caractérisé en ce que l'extrémité intérieure de la spirale est située à proximité du centre de la surface circulaire pour former la deuxième extrémité (16) du conduit, tandis que l'extrémité extérieure de la spirale est ramenée vers l'axe pour former la première extrémité (18) du conduit (15).

5. Dispositif selon la revendication 3, caractérisé en ce que la deuxième extrémité (36) du conduit (37) est située à la périphérie de ladite surface circulaire, de façon à permettre l'éjection du liquide filtré par cette deuxième extrémité (36) pendant la rotation du conduit, lesdits moyens pour faire passer le liquide de la suspension à travers la membrane comportant la pression d'aspiration créée par cette éjection.

6. Dispositif selon la revendication 5, caractérisé en ce que le conduit comporte, au voisinage de sa deuxième extrémité, une portion (45) le long de laquelle la distance minimale de ladite portion audit axe décroît lorsqu'on se rapproche de ladite deuxième extrémité, la décroissance (D–d) de cette distance pour toute la longueur de ladite portion (45) étant supérieure à la dimension transversale intérieure (c) de cette portion du conduit, cette dimension étant mesurée suivant un rayon (47) de la spirale.

7. Dispositif selon la revendication 5, caractérisé en ce que
- la membrane (48) a la forme d'un tube cylindrique de révolution fermé à une première de ses extrémités, cette membrane étant fixée au conduit par la deuxième extrémité du tube, l'axe (49) du tube étant vertical et confondu avec l'axe de rotation du conduit (52),
ledit dispositif comportant en outre:
un corps macroporeux tubulaire (50) dont la surface extérieure est appliquée sur la surface intérieure de la membrane (48), et
un noyau cylindrique (54) solidaire du conduit (52) et disposé le long dudit axe (49) dans le volume intérieur du corps macroporeux (50) tubulaire, de façon à ménager entre la surface du noyau (54) et la surface interne du corps macroporeux (50) un espace tubulaire capillaire (55) en communication avec la première extrémité du conduit (52), la surface extérieure de ladite membrane (48) constituant le côté de la membrane en contact avec la suspension,
- le conduit (52) étant capillaire au moins suivant deux parties extrêmes de ce conduit,
- lesdits moyens pour faire passer le liquide de la suspension à travers la membrane comportant les tensions capillaires dans les pores de la membrane (48), du corps macroporeux (50) et de l'espace tubulaire capillaire (55).

8. Dispositif selon la revendication 7, caractérisé en ce que le conduit (52) est capillaire suivant toute sa longueur.

9. Dispositif selon la revendication 7, caractérisé en ce que
- le conduit comporte en outre entre ses deux parties extrêmes capillaires (76, 78) une partie médiane (77) dont la dimension transversale intérieure est suffisamment grande pour que les tensions capillaires du liquide y soient négligeables,
- une première partie extrême capillaire (76) du conduit ramène l'extrémité extérieure de la spirale vers l'axe de façon à former la première extrémité du conduit, et
- la deuxième partie extrême (78) capillaire du conduit amène l'extrémité intérieure de la spirale vers la périphérie de la surface circulaire de façon à former la deuxième extrémité du conduit.

10. Dispositif suivant la revendication 5, caractérisé en ce qu'il comporte en outre un récipient fixe (42) entourant le conduit et comportant une ouverture (43) ménagée dans sa partie supérieure pour permettre de recueillir le liquide filtré.

11. Dispositif selon la revendication 7, caractérisé en ce qu'il comporte en outre un récipient (81) solidaire du conduit et entourant ce conduit, la paroi de ce récipient étant munie dans sa partie supérieure d'une membrane poreuse (86) étanche au liquide de la suspension mais perméable à l'air, ce récipient (81) comportant des moyens d'ouverture pour permettre de recueillir le liquide filtré.

12. Dispositif selon la revendication 2, caractérisé en ce que le conduit (30) a la forme d'une hélice disposée suivant une surface cylindrique de révolution autour dudit axe, les deux extrémités de l'hélice étant ramenées vers ledit axe pour former les première et deuxième extrémités du conduit.

**Patentansprüche**

1. Verfahren zum Filtern einer Partikelsuspension in einer Flüssigkeit, demgemäß:
- die Flüssigkeit der Suspension, die sich auf einer Seite einer porösen Membran befindet, kontinuierlich durch diese Membran dringt, so daß sich ein Strom gefilterter Flüssigkeit auf der zweiten Seite der Membran ergibt und die Partikel der Suspension sich in unerwünschter Weise auf der ersten Seite der Membran anlagern und die Poren verstopfen,
- und die gefilterte Flüssigkeit kurzzeitig in umgekehrter Richtung zur normalen Flußrichtung in Richtung auf die Membran zurückgedrückt wird, so daß die auf der ersten Seite der Membran angelagerten Partikel wieder in die Suspension zurückgelangen, dadurch gekennzeichnet, daß die kurzzeitige Strömungsumkehr der gefilterten Flüssigkeit dadurch erfolgt,
- daß der Strom der gefilterten Flüssigkeit (26) in ein Ende einer Leitung (15) eingespeist wird, die um eine Achse aufgerollt ist, wobei die gefilterte Flüssigkeit am anderen Ende der Leitung entnommen wird,
- daß die Leitung zunehmend in Drehung um die Achse versetzt wird, und zwar in Gegenrichtung (29) zur Richtung (27) der relativen Strömung der gefilterten Flüssigkeit in der Leitung, bis die Drehgeschwindigkeit der Leitung einen konstanten vorgegebenen Wert größer als die Geschwindigkeit der relativen Strömung erreicht,
- und daß dann die Drehbewegung der Leitung plötzlich abgebremst wird.

2. Vorrichtung zum Filtern einer Partikelsuspension in einer Flüssigkeit,
- mit einer porösen Membran, deren Poren so gewählt sind, daß die Partikel einer Suspension nicht durchgelassen werden,
- mit Mitteln, um die Flüssigkeit der Suspension durch die Membran hindurchzulassen,
- und mit Mitteln, um einen kurzzeitigen Gegendruck auf die gefilterte Flüssigkeit stromabwärts der Membran auszuüben, dadurch gekennzeichnet, daß diese Mittel, um auf die stromabwärts gelegene Seite der Membran (2) kurzzeitig einen Gegendruck in der gefilterten Flüssigkeit auszuüben, folgende Elemente aufweisen:
- eine Leitung (15), die um eine Achse aufgewickelt ist,
- Mittel (5, 11), um den Strom der gefilterten Flüssigkeit in die Leitung (15) einzuspeisen, und zwar über ein erstes Leitungsende (18), das sich in der Nähe der Achse befindet, so daß sich eine relative Strömung der Flüssigkeit in der Leitung um die Achse in einer Richtung (27) zum zweiten Ende hin ergibt,
- Mittel (19 bis 22), um die Leitung zunehmend um ihre Achse in Drehung zu versetzen, und zwar in Gegenrichtung (29) zu der Richtung (27) der relativen Strömung, bis eine Drehgeschwindigkeit eines konstanten vorgegebenen Werts erreicht ist, der größer als die Geschwindigkeit der relativen Strömung ist,
– und Mittel (28), um plötzlich die Drehbewegung der Leitung abzubremsen.

3. Vorrichtung nach Anspruch 2, dadurch gekennzeichnet, daß die Leitung (15) spiralförmig ausgebildet ist und im wesentlichen gemäß einer kreisförmigen ebenen Fläche senkrecht zur Achse und zentriert zu dieser angeordnet ist.

4. Vorrichtung nach Anspruch 3, dadurch gekennzeichnet, daß das innere Ende der Spirale in der Nähe des Zentrums der kreisförmigen Oberfläche liegt und das zweite Ende (16) der Leitung bildet, während das äußere Ende der Spirale zur Achse zurückgeführt wird, um das erste Ende (18) der Leitung (15) zu bilden.

5. Vorrichtung nach Anspruch 3, dadurch gekennzeichnet, daß das zweite Ende (36) der Leitung (37) an der Peripherie der kreisförmigen Oberfläche liegt und den Auslaß der gefilterten Flüssigkeit während der Drehung der Leitung erlaubt, und daß die Mittel, mit denen die Flüssigkeit der Suspension durch die Membran gedrückt wird, vom Ansaugdruck gebildet werden, der durch diesen Auslaß erzeugt wird.

6. Vorrichtung nach Anspruch 5, dadurch gekennzeichnet, daß die Leitung in der Nähe ihres zweiten Endes einen Bereich (45) aufweist, entlang dem der minimale Abstand dieses Bereichs von der Achse mit zunehmender Annäherung an das zweite Ende abnimmt, wobei die Abnahme (D–d) dieses Abstands über die ganze Länge dieses Bereichs (45) größer als die innere Querabmessung (c) dieses Leitungsbereichs ist und diese Abmessung in Richtung eines Radius (47) der Spirale gemessen wird.

7. Vorrichtung nach Anspruch 5, dadurch gekennzeichnet,
– daß die Membran (48) die Form eines zylindrischen und drehsymmetrischen Rohrs besitzt, das an einem ersten Ende verschlossen ist, wobei die Membran an die Leitung über das zweite Ende des Rohrs angeschlossen ist und die Achse (49) des Rohrs senkrecht steht und mit der Drehachse der Leitung (52) zusammenfällt,
– daß die Vorrichtung weiter aufweist
einen rohrförmigen makroporösen Körper (50), dessen äußere Oberfläche auf der inneren Oberfläche der Membran (48) aufliegt,
und einen zylindrischen Kern (54), der fest mit der Leitung (52) verbunden ist und entlang der Achse (49) im Innenvolumen des rohrförmigen makroporösen Körpers (50) so angeordnet ist, daß zwischen der Oberfläche des Kerns (54) und der inneren Oberfläche des makroporösen Körpers (50) ein rohrförmiger Kapillarraum (55) entsteht, der mit dem ersten Ende der Leitung (52) in Verbindung steht, wobei die äußere Oberfläche der Membran (48) die mit der Suspension in Kontakt stehende Seite der Membran bildet,
– daß die Leitung (52) mindestens an ihren beiden Enden kapillarförmig ist,
– daß die Mittel, um die Flüssigkeit der Suspension durch die Membran zu drücken, die Kapillarspannungen in den Poren der Membran (48), des makroporösen Körpers (50) und des kapillarförmigen rohrförmigen Raums (55) beinhalten.

8. Vorrichtung nach Anspruch 7, dadurch gekennzeichnet, daß die Leitung (52) über ihre ganze Länge kapillarförmig ist.

9. Vorrichtung nach Anspruch 7, dadurch gekennzeichnet,
– daß die Leitung zwischen ihren beiden kapillarförmigen Endbereichen (76, 78) einen mittleren Bereich (77) aufweist, in dem die inneren Querabmessungen ausreichend groß sind, um die Kapillarspannungen der Flüssigkeit in diesem Bereich vernachlässigbar klein zu machen,
– daß ein erster kapillarförmiger Endbereich (76) der Leitung das äußere Ende der Spirale zur Achse zurückführt und das erste Ende der Leitung bildet,
– und daß der zweite kapillarförmige Endbereich (78) der Leitung das innere Ende der Spirale zur Peripherie der kreisförmigen Oberfläche zurückführt und das zweite Ende der Leitung bildet.

10. Vorrichtung nach Anspruch 5, dadurch gekennzeichnet, daß sie außerdem einen festen Behälter (42) aufweist, der die Leitung umgibt und eine Öffnung (43) im oberen Bereich enthält, um die gefilterte Flüssigkeit aufzufangen.

11. Vorrichtung nach Anspruch 7, dadurch gekennzeichnet, daß sie außerdem einen Behälter (81) aufweist, der mit der Leitung verbunden ist und diese umgibt, wobei die Wand dieses Behälters in ihrem oberen Bereich eine poröse Membran (86) aufweist, die für die Flüssigkeit der Suspension dicht, aber für Luft durchlässig ist, wobei dieser Behälter (81) Öffnungsmittel aufweist, um die gefilterte Flüssigkeit aufzunehmen.

12. Vorrichtung nach Anspruch 2, dadurch gekennzeichnet, daß die Leitung (30) Spiralform besitzt und entlang einer zylindrischen und zur Achse drehsymmetrischen Oberfläche angeordnet ist, wobei die beiden Enden der Spirale zur Achse zurückgeführt sind, um das erste und zweite Ende der Leitung zu bilden.

**Claims**

1. A method for filtering a suspension of particles in a liquid, in which method:
– the liquid of the suspension on a first side of a porous membrane is passed continuously through the membrane so as to obtain a flow of filtered liquid on the second side of the membrane, particles from the suspension then collecting in an undesirable manner on the first side of the membrane and clogging its pores,
– and the filtered liquid is caused to flow at least momentarily in the opposite direction to the aforementioned flow towards the membrane so as to return to the suspension the particles collected on the first side of the membrane during the aforementioned passage of the liquid therethrough, characterized in that the temporary return flow of the liquid is obtained:
– by feeding the flow of filtered liquid (26) into one end of a conduit (15) which is wound around an axis and recovering the filtered liquid at the other end of the conduit,

- by progressively rotating the conduit about the axis in the direction (29) opposite to the direction (27) of flow of the filtered liquid relative to the conduit until the rotation speed of the conduit attains a predetermined constant value greater than the speed of the filtered liquid relative to the conduit,
- and by suddenly stopping rotation of the conduit.

2. A device for filtering a suspension of particles in a liquid, comprising:
- a porous membrane the pores of which are adapted to hold back the particles of a suspension,
- means for passing the liquid of the suspension through the membrane,
- means for exerting on the downstream side of the membrane a momentary pressure such as to reverse the flow of the filtered liquid,
characterized in that said means for exerting on the downstream side of the membrane (2) a momentary pressure such as to reverse the flow of the filtered liquid comprise:
- a conduit (15) wound around an axis,
- means (5, 11) for feeding the flow of filtered liquid into a first end (18) of the conduit (15) situated near the axis so as to cause a relative flow of the liquid in the conduit towards its second end in one direction (27) about the axis,
- means (19 to 22) for progressively rotating the conduit about the axis in the direction (29) opposite to that (27) of the relative flow, up to a speed of rotation of a predetermined constant value greater than the speed of the relative flow, and
- means (28) for suddenly stopping rotation of the conduit.

3. A device according to claim 2, characterized in that the conduit (15) is in the shape of a spiral substantially disposed on a plane circular surface perpendicular to and centered on the axis.

4. A device according to claim 3, characterized in that the inner end of the spiral is situated in the vicinity of the centre of the circular surface to form the second end (16) of the conduit, and the outer end of the spiral is brought back towards the axis to constitute the first end (18) of the conduit (15).

5. A device according to claim 3, characterized in that the second end (36) of the conduit (37) is situated at the perimeter of said circular surface so as to provide for ejection of the filtered liquid from this second end (36) during rotation of the conduit, the means for passing the liquid of the suspension through the membrane utilizing the suction force generated by this ejection.

6. A device according to claim 5, characterized in that the conduit may comprise in the vicinity of its second end a portion (45) along which the minimum distance from this portion to the axis decreases (D−d) on approaching the second end, the decrease in this distance over the entire length of this portion (45) being greater than the inside transverse dimension (c) of this portion of the conduit as measured along a radius (47) of the spiral.

7. A device according to claim 5, characterized in that
- the membrane (48) is in the shape of a cylindrical tube of revolution closed at a first end, the membrane being fixed to the conduit by the second end of the tube, the axis (49) of which is vertical and coincident with the axis of rotation of the conduit (52),
- the device further comprises:
a tubular macroporous body (50) the outside surface of which is placed against the inside surface of the membrane (48), and
a cylindrical core (54) fastened to the conduit (52) and disposed along the axis (49) inside the macroporous tubular body (50) so as to leave between the surface of the core (54) and the inside surface of the macroporous body (50) a tubular capillary space (55) communicating with the first end of the conduit (52), the outside surface of the membrane (48) constituting the side thereof in contact with the suspension,
- the conduit (52) is a capillary conduit at least at its two ends,
- the means for passing the liquid of the suspension through the membrane utilize the capillary forces in the pores of the membrane (48) in the macroporous body (50) and in the capillary tubular space (55).

8. A device according to claim 7, characterized in that the conduit (52) is a capillary conduit over all of its length.

9. A device according to claim 7, characterized in that
- the conduit comprises between two capillary end parts (76, 78) a middle part (77) whose inside transverse dimension is sufficiently large for the capillary forces in the liquid to be negligible there,
- a capillary first end part (76) of the conduit brings the outer end of the spiral back towards the axis so as to form the first end of the conduit, and
- the capillary second end part (78) of the conduit brings the inner end of the spiral towards the perimeter of the circular surface so as to form the second end of the conduit.

10. A device according to claim 5, characterized in that it further comprises a stationary container (42) surrounding the conduit and comprising an opening (43) in its upper part to enable the filtered liquid to be collected.

11. A device according to claim 7, characterized in that it further comprises a container (81) surrounding and fixed to the conduit, the upper part of the conduit wall being fitted with a porous membrane (86) which is fluid-tight relative to the liquid of the suspension but permeable to air, the container (1) comprising opening means to enable the filtered liquid to be collected.

12. A device according to claim 2, characterized in that the conduit (30) is in the shape of a helix disposed on a cylindrical surface of revolution about the axis, the two ends of the helix being brought back towards the axis to form the first and second ends of the conduit.

FIG. 1

# FIG. 2

# FIG. 3

FIG. 4

EP 0 198 421 B1

FIG. 5

FIG. 6

FIG. 7

# FIG. 8

EP 0 198 421 B1

# FIG. 9

# FIG. 10

EP 0 198 421 B1

# FIG. 11